Europäisches Patentamt

European Patent Office

Office européen des brevets

(11) Veröffentlichungsnummer: **0 312 767 B1**

(12) **EUROPÄISCHE PATENTSCHRIFT**

(45) Veröffentlichungstag der Patentschrift: **19.11.92**

(21) Anmeldenummer: **88114892.8**

(22) Anmeldetag: **12.09.88**

(51) Int. Cl.⁵: **H01M 8/06**, H01M 8/04

(54) Beseitigung von Wasserstoff und Sauerstoff im Elektrolyten von im schwerelosen Raum betriebenen Wasserstoff/Sauerstoff Brennstoffzellenbatterien.

(30) Priorität: **24.09.87 DE 3732212**

(43) Veröffentlichungstag der Anmeldung:
**26.04.89 Patentblatt 89/17**

(45) Bekanntmachung des Hinweises auf die
Patenterteilung:
**19.11.92 Patentblatt 92/47**

(84) Benannte Vertragsstaaten:
**BE DE FR**

(56) Entgegenhaltungen:
**DE-C- 1 288 403**
**FR-A- 1 546 386**
**US-A- 3 525 643**
**US-A- 3 692 585**

**PATENT ABSTRACTS OF JAPAN, Band 9, Nr.
280 (E-356)[2003], 8. November 1985; & JP-
A-60 124 367 (KOGYO GIJUTSUIN (JAPAN))
03-07-1985**

(73) Patentinhaber: **SIEMENS AKTIENGESELL-
SCHAFT**
**Wittelsbacherplatz 2**
**W-8000 München 2(DE)**

(72) Erfinder: **Kohlmüller, Hans, Dipl.-Ing.**
**Friedrich-Bauer-Strasse 5**
**W-8520 Erlangen(DE)**
Erfinder: **Frey, Hermann, Dipl.-Ing.**
**Ratiborer Strasse 4**
**W-8520 Erlangen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Beseitigung von Wasserstoff und Sauerstoff im frei beweglichen Elektrolyten von im schwerelosen Raum betriebenen $H_2/O_2$-Brennstoffzellenbatterien sowie eine Vorrichtung zur Durchführung dieses Verfahrens.

Bei Brennstoffzellen bzw. Brennstoffzellenbatterien, die mit gasförmigen Reaktanten, wie Wasserstoff und Sauerstoff, und mit einem flüssigen, frei beweglichen Elektrolyten betrieben werden, gelangen diese Reaktanten - infolge von Undichtigkeiten und aufgrund der Löslichkeit von Gasen in Flüssigkeiten - in den Elektrolyten bzw. in den Elektrolytkreislauf. Bei einem "normalen" Betrieb der Batterien erfolgt im Elektrolyttank (Elektrolytvorratsbehälter) - aufgrund der Schwerkraft - eine Trennung von Gas und Flüssigkeit, so daß die im Elektrolyten gelösten gasförmigen Reaktanten leicht entfernt werden können. Dies ist jedoch im schwerelosen Raum, wie er beispielsweise beim Einsatz von Brennstoffzellenbatterien in der Raumfahrt gegeben ist, nicht der Fall.

Durch den Übertritt von Gasen in den Elektrolyten schäumt dieser auf. Damit ist dann aber eine Volumenvergrößerung und insbesondere auch eine Abnahme der Leitfähigkeit des beispielsweise alkalischen Elektrolyten verbunden, was zu einer Beeinträchtigung der Funktionsfähigkeit der Batterie führt, wenn die Gase nicht beseitigt werden.

In der Raumfahrt wurden zwar bereits Brennstoffzellen eingesetzt (siehe: "Luftfahrttechnik, Raumfahrttechnik", Bd. 16, 1970, Nr. 11/12, Seiten 300 bis 304), Brennstoffzellenbatterien mit flüssigem, frei beweglichem Elektrolyten gelangten bisher im schwerelosen Raum aber noch nicht zur Anwendung. Deshalb hat sich das Problem der Beseitigung der im Elektrolyten gelösten gasförmigen Reaktanten bislang nicht gestellt. Die in anderem Zusammenhang zur Trennung von Gas/Flüssigkeits-Gemischen im schwerelosen Raum ergriffenen Maßnahmen, d.h. die Verwendung von Zentrifugen, Zyklonen, selektiven Membranen und Dochten, kommen für das vorliegende Problem nicht in Betracht, weil sie einerseits sehr aufwendig sind, insbesondere auch in räumlicher Hinsicht, und weil sie andererseits ausnahmslos in nicht unerheblichem Ausmaß mit dem Verbrauch von elektrischer Energie verbunden sind. Dies wäre im vorliegenden Fall aber unerwünscht, weil die Energie der Brennstoffzellenbatterie entnommen werden müßte und damit für den eigentlichen Verbrauchszweck verlorenginge.

Aufgabe der Erfindung ist es, ein Verfahren anzugeben, das die Beseitigung von Wasserstoff und Sauerstoff im frei beweglichen Elektrolyten von im schwerelosen Raum betriebenen $H_2/O_2$-Bren- nstoffzellenbatterien erlaubt.

Dies wird erfindungsgemäß dadurch erreicht, daß im Elektrolyten durch Zugabe eines der gasförmigen Reaktanten annähernd ein Molverhältnis von $H_2:O_2$ wie 2:1 eingestellt wird, und daß der Wasserstoff und der Sauerstoff katalytisch zu Wasser umgesetzt werden.

Im Elektrolyten von $H_2/O_2$-Brennstoffzellenbatterien treten im wesentlichen nur Wasserstoff und Sauerstoff als gelöste Gase auf. Diese Gase lassen sich katalytisch rekombinieren, d.h. zu Wasser umsetzen. Da die Gase im allgemeinen im Elektrolyten jedoch nicht in dem der Zusammensetzung des Wassers entsprechenden stöchiometrischen Verhältnis vorliegen werden, ist es erforderlich, dem Elektrolyten einen der gasförmigen Reaktanten, d.h. den im Unterschuß vorliegenden Reaktanten, zuzusetzen. Dazu ist es dann erforderlich, das Verhältnis von Wasserstoff zu Sauerstoff im Elektrolyten zu bestimmen.

Beim erfindungsgemäßen Verfahren wird das Verhältnis von Wasserstoff zu Sauerstoff im Elektrolyten, d.h. der Überschuß an Wasserstoff oder Sauerstoff, vorzugsweise elektrochemisch mittels einer Redox-Elektrode ermittelt. Ist dabei das Potential der Redox-Elektrode positiv, wird dem Elektrolyten Wasserstoff zugegeben, ist das Potential negativ, dann wird Sauerstoff zugesetzt, und zwar jeweils in der für das stöchiometrische Verhältnis erforderlichen Menge, um eine vollständige Rekombination zu gewährleisten. Im allgemeinen wird es dabei erforderlich sein, dem Elektrolyten Wasserstoff zuzusetzen.

Eine Vorrichtung zur Durchführung des erfindungsgemäßen Verfahrens weist einen im Elektrolytkreislauf der Brennstoffzellenbatterie angeordneten Gasrekombinator mit einer Redox-Elektrode, einer Bezugselektrode, Zuführungseinrichtungen für Wasserstoff und Sauerstoff, und einem Katalysator zur Umsetzung von Wasserstoff mit Sauerstoff auf. Der Katalysator befindet sich dabei vorteilhaft auf einem porösen Katalysatorträger. Vorzugsweise ist der Katalysator Platin. Die Redox-Elektrode ist vorzugsweise eine Platinelektrode, die Bezugselektrode vorzugsweise eine Quecksilberelektrode.

Bei der erfindungsgemäßen Vorrichtung sind in den Zuführungseinrichtungen des Gasrekombinators für Wasserstoff und Sauerstoff vorteilhaft Stellglieder, vorzugsweise impulsgesteuerte Magnetventile, angeordnet, die an einen Regler angeschlossen sind; der Regler wiederum ist mit der Redox-Elektrode und mit der Bezugselektrode verbunden. Über den Regler wird dann die Zugabe des im Unterschuß vorhandenen gasförmigen Reaktanten zum Elektrolyten gesteuert. Die Stellglieder können beispielsweise auch Nadelventile sein.

Vorteilhaft sind die Zuführungseinrichtungen des Gasrekombinators für Wasserstoff und Sauerstoff mittels Gasleitungen an die entsprechenden Gaszuführungskanäle zur Brennstoffzellenbatterie angeschlossen, d.h. an den $H_2$- bzw. $O_2$-Zuführungskanal. Ferner weisen die beiden Zuführungseinrichtungen vorteilhaft Fritten auf, die eine gute Verteilung des zugesetzten gasförmigen Reaktanten im Elektrolyten erlauben.

Anhand eines Ausführungsbeispieles und einer Figur, in der schematisch im Schnitt eine bevorzugte Ausführungsform einer Vorrichtung zur Durchführung des erfindungsgemäßen Verfahrens dargestellt ist, soll die Erfindung noch näher erläutert werden.

Im Elektrolytkreislauf 1 einer $H_2/O_2$-Brennstoffzellenbatterie 2 ist ein Gasrekombinator 3 angeordnet. Die Elektrolytzirkulation wird mit einer Kreiselpumpe 4 aufrechterhalten. Volumenänderungen des Elektrolyten durch Reaktionswasser und Gasanteile werden mit Hilfe eines Konstantdruck-Elektrolytbehälters 5 ausgeglichen. Der Elektrolytbehälter weist dazu beispielsweise eine Membran oder eine Blase auf, die mit Gasdruck beaufschlagt ist.

Der Gasrekombinator 3 weist eine Redox-Elektrode 6 und eine Bezugselektrode 7 sowie Zuführungseinrichtungen 8 und 9 für Wasserstoff bzw. Sauerstoff und einen Katalysator 10 zur Umsetzung von Wasserstoff mit Sauerstoff auf, der auf einen porösen Katalysatorträger aufgebracht ist. Bei der Verwendung eines alkalischen Elektrolyten, wie Kalilauge, besteht der Katalysator beispielsweise aus gesinterten Nickelspänen, die platiniert sind. Beim Einsatz eines sauren Elektrolyten, wie Phosphorsäure, wird als Katalysator beispielsweise auf Kohle aufgebrachtes Platin verwendet.

Die Redox-Elektrode 6, die beispielsweise eine platinierte Platinelektrode ist, und die Bezugselektrode 7, beispielsweise in Form einer $Hg/Hg_2Cl_2$- oder $Hg/HgO$-Elektrode (im alkalischen Elektrolyten) bzw. einer $Hg/Hg_2SO_4$-Elektrode (im sauren Elektrolyten), sind jeweils mit einem Regler 11 verbunden. An den Regler 11 sind impulsgesteuerte Magnetventile 12 und 13 angeschlossen, über die jeweils die Einbringung des im Unterschuß vorhandenen gasförmigen Reaktanten erfolgt. Das Magnetventil 12 ist dazu in der Zuführungseinrichtung 8 für Wasserstoff angeordnet und das Magnetventil 13 in der Zuführungseinrichtung 9 für Sauerstoff.

Die Zuführungseinrichtungen 8 und 9 für Wasserstoff bzw. Sauerstoff sind mittels Gasleitungen 14 und 15 an die Gaszuführungskanäle 16 bzw. 17 für Wasserstoff und Sauerstoff zur Brennstoffzellenbatterie 2 angeschlossen; über Gasabführungskanäle 18 (für $H_2$) und 19 (für $O_2$) werden die gasförmigen Reaktanten aus der Batterie entfernt. Die Zuführungseinrichtungen 8 und 9 weisen Fritten 20 und 21 auf, die eine freie Verteilung der gasförmigen Reaktanten im Elektrolyten bewirken. Bei einem alkalischen Elektrolyten bestehen diese Fritten beispielsweise aus porösem, gesintertem Nickel, bei einem sauren Elektrolyten beispielsweise aus porösem Polytetrafluorethylen oder aus porösen und säurebeständigen keramischen anorganischen Materialen, wie Glas und Magnesiumoxid.

Wird der Elektrolyt einer alkalischen $H_2/O_2$-Brennstoffzellenbatterie, die beispielsweise einen Aufbau entsprechend der DE-PS 27 29 640 aufweist, wobei der Elektrolyt von den Elektroden jeweils durch ein Asbestdiaphragma getrennt ist, über diese Asbestdiaphragmen mit Wasserstoff bzw. Sauerstoff gesättigt, so müssen im Gasrekombinator mindestens diese Gasmengen umgesetzt werden. Die Sättigungsgeschwindigkeit für die Gase im Elektrolyten ist dabei diffusionsbegrenzt. Für eine 70zellige Batterie beispielsweise gilt folgendes.

Bei einer Diaphragmenfläche von 340 cm$^2$ (Gesamtfläche in der Batterie: 23 800 cm$^2$), einer Diaphragmenstärke von 0,3 mm, einem Diffusionskoeffizienten (für Wasserstoff bzw. Sauerstoff) von ca. $10^{-5}$ cm$^2$.s$^{-1}$, einem Gasdruck von ca. 2 bar und einer Konzentration von ca. $10^{-4}$ mol.kg$^{-1}$.bar$^{-1}$ bzw. $2.10^{-7}$ mol.cm$^{-3}$ beträgt die durch Diffusion in den Elektrolyten eingebrachte Gasmenge bei Wasserstoff und Sauerstoff - wegen der ähnlichen Löslichkeit in Lauge und dem ähnlichen Diffusionskoeffizienten - jeweils ca. $3.10^{-3}$ mol.h$^{-1}$. Dieser Massetransport entspricht bei Wasserstoff einem Ladungstransport von 0,16 A und bei Sauerstoff einem Ladungstransport von 0,32 A. Beträgt die Umsetzungsrate im Gasrekombinator etwa 1 mA.cm$^{-2}$, so ist eine Katalysatorfläche von etwa 500 cm$^2$ ausreichend für die Beseitigung der im Elektrolyten enthaltenen gasförmigen Reaktanten. Wegen möglicherweise auftretenden Undichtigkeiten in der Batterie wird der Gasrekombinator zweckmäßigerweise jedoch etwas größer ausgelegt sein.

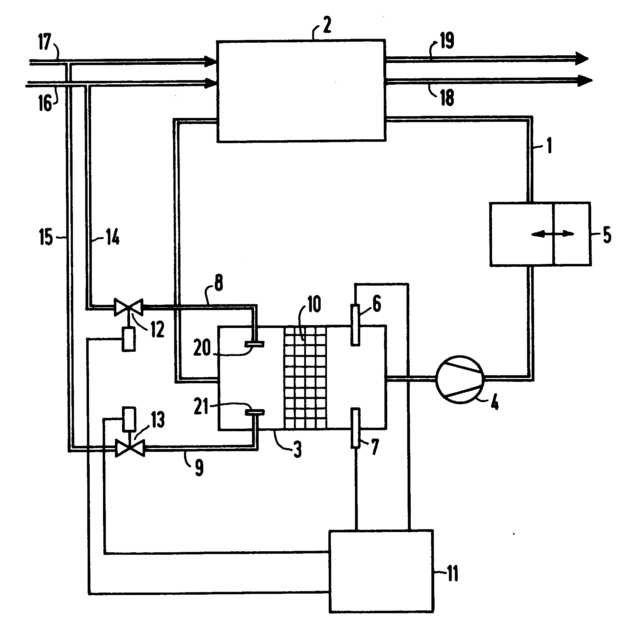

**Patentansprüche**

1.  Verfahren zur Beseitigung von Wasserstoff und Sauerstoff im frei beweglichen Elektrolyten von im schwerelosen Raum betriebenen $H_2/O_2$-Brennstoffzellenbatterien, **dadurch gekennzeichnet,** daß im Elektrolyten das Verhältnis von Wasserstoff zu Sauerstoff bestimmt wird, daß durch Zugabe eines der gasförmigen Reaktanten annähernd ein Molverhältnis von $H_2:O_2$ wie 2:1 eingestellt wird, und daß der Wasserstoff und der Sauerstoff katalytisch zu Wasser umgesetzt werden.

2.  Verfahren nach Anspruch 1, **dadurch gekennzeichnet,** daß das Verhältnis von Wasserstoff zu Sauerstoff im Elektrolyten elektrochemisch mittels einer Redox-Elektrode ermittelt wird, und daß dem Elektrolyten bei positivem Potential Wasserstoff und bei negativem Potential Sauerstoff zugegeben wird.

3. $H_2/O_2$-Brennstoffzellenbatterie zum Betrieb im schwerelosen Raum mit einer Vorrichtung zur Beseitigung von Wasserstoff und Sauerstoff im frei beweglichen Elektrolyten, **gekennzeichnet** durch einen im Elektrolytkreislauf (1) der Brennstoffzellenbatterie (2) angeordneten Gasrekombinator (3) mit einer Redox-Elektrode (6), einer Bezugselektrode (7), Zuführungseinrichtungen (8, 9) für Wasserstoff und Sauerstoff und einem Katalysator (10) zur Umsetzung von Wasserstoff mit Sauerstoff.

4. $H_2/O_2$-Brennstoffzellenbatterie nach Anspruch 3, **dadurch gekennzeichnet,** daß sich der Katalysator (10) auf einem porösen Katalysatorträger befindet.

5. $H_2/O_2$-Brennstoffzellenbatterie nach Anspruch 3 oder 4, **dadurch gekennzeichnet,** daß der Katalysator (10) Platin ist.

6. $H_2/O_2$-Brennstoffzellenbatterie nach einem der Ansprüche 3 bis 5, **dadurch gekennzeichnet,** daß die Redox-Elektrode (6) eine Platinelektrode ist.

7. $H_2/O_2$-Brennstoffzellenbatterie nach einem oder mehreren der Ansprüche 3 bis 6, **dadurch gekennzeichnet,** daß die Bezugselektrode (7) eine Quecksilberelektrode ist.

8. $H_2/O_2$-Brennstoffzellenbatterie nach einem oder mehreren der Ansprüche 3 bis 7, **dadurch gekennzeichnet,** daß in den Zuführungseinrichtungen (8, 9) für Wasserstoff und Sauerstoff Stellglieder (12, 13), vorzugsweise impulsgesteuerte Magnetventile, angeordnet sind, daß die Stellglieder (12, 13) an einen Regler (11) angeschlossen sind, und daß der Regler (11) mit der Redox-Elektrode (6) und mit der Bezugselektrode (7) verbunden ist.

9. $H_2/O_2$-Brennstoffzellenbatterie nach einem oder mehreren der Ansprüche 3 bis 8, **dadurch gekennzeichnet,** daß die Zuführungseinrichtungen (8, 9) für Wasserstoff und Sauerstoff mittels Gasleitungen (14, 15) an die entsprechenden Gaszuführungskanäle (16, 17) zur Brennstoffzellenbatterie (2) angeschlossen sind.

10. $H_2/O_2$-Brennstoffzellenbatterie nach einem oder mehreren der Ansprüche 3 bis 9, **dadurch gekennzeichnet,** daß die Zuführungseinrichtungen (8, 9) für Wasserstoff und Sauerstoff mit Fritten (20, 21) versehen sind.

## Claims

1. Process for the removal of hydrogen and oxygen in the freely movable electrolyte of $H_2/O_2$ fuel cell batteries operating in a weightless environment, characterised in that in the electrolyte the ratio of hydrogen to oxygen is determined, in that by the addition of one of the gaseous reactants a mole ratio of $H_2$:$O_2$ of approximately 2:1 is attained, and in that the hydrogen and the oxygen are catalytically converted to water.

2. Process according to claim 1, characterised in that the ratio of hydrogen to oxygen is determined in the electrolyte electrochemically by means of a redox electrode, and in that in case of a positive potential hydrogen is added to the electrolyte and in case of a negative potential oxygen is added.

3. $H_2/O_2$ fuel cell battery for operating in a weightless environment with a device for removal of hydrogen and oxygen in the freely movable electrolyte, characterised by a gas recombiner (3) arranged in the electrolyte circuit (1) of the fuel cell battery (2), having a redox electrode (6), a reference electrode (7), feed devices (8, 9) for hydrogen and oxygen, and a catalyst (10) for the reaction of hydrogen with oxygen.

4. $H_2/O_2$ fuel cell battery according to claim 3, characterised in that the catalyst (10) is on a porous catalyst carrier.

5. $H_2/O_2$ fuel cell battery according to claim 3 or 4, characterised in that the catalyst (10) is platinum.

6. $H_2/O_2$ fuel cell battery according to one of claims 3 to 5, characterised in that the redox electrode (6) is a platinum electrode.

7. $H_2/O_2$ fuel cell battery according to one or more than one of claims 3 to 6, characterised in that the reference electrode (7) is a mercury electrode.

8. $H_2/O_2$ fuel cell battery according to one or more than one of claims 3 to 7, characterised in that adjustment members (12, 13), preferably pulse-controlled solenoid valves, are arranged in the feed devices (8, 9) for hydrogen and oxygen, in that the adjustment members (12, 13) are connected to a regulator (11), and in that the regulator (11) is connected to the redox electrode (6) and to the reference electrode (7).

9. H$_2$/O$_2$ fuel cell battery according to one or more than one of claims 3 to 8, characterised in that the feed devices (8, 9) for hydrogen and oxygen are connected by means of gas lines (14, 15) to the corresponding gas supply ducts (16, 17) to the fuel cell battery (2).

10. H$_2$/O$_2$ fuel cell battery according to one or more than one of claims 3 to 9, characterised in that the feed devices (8, 9) for hydrogen and oxygen are provided with frits (20, 21).

**Revendications**

1. Procédé d'élimination de l'hydrogène et de l'oxygène dans des électrolytes libres de se mouvoir de batteries de piles à combustible H$_2$/O$_2$ fonctionnant en apesanteur, caractérisé en ce qu'il consiste à déterminer dans l'électrolyte le rapport de l'hydrogène à l'oxygène, à établir par addition de l'un des réactifs gazeux approximativement un rapport molaire de H$_2$:O$_2$ tel que 2:1 et à transformer l'hydrogene et l'oxygène catalytiquement en eau.

2. Procédé suivant la revendication 1, caractérisé en ce qu'il consiste à déterminer le rapport de l'hydrogène à l'oxygène de l'électrolyte par voie électrochimique au moyen d'une électrode rédox et à ajouter à l'électrolyte de l'hydrogène si le potentiel est positif et de l'oxygène si le potentiel est négatif.

3. Batterie de piles à combustible H$_2$/O$_2$ destinée à fonctionner en apesanteur, comprenant un dispositif d'élimination de l'hydrogène et de l'oxygène dans l'électrolyte libre de se mouvoir, caractérisée par un recombinateur de gaz (3), qui est monté dans le circuit pour l'électrolyte (1) de la batterie de pile à combustible (2) et qui comporte une électrode rédox (6), une électrode de référence (7), des dispositifs d'amenée (8,9) de l'hydrogène et de l'oxygène et un catalyseur (10) de réaction de l'hydrogène sur l'oxygène.

4. Batterie de piles à combustible H$_2$/O$_2$ suivant la revendication 3, caractérisée en ce que le catalyseur (10) se trouve sur un support de catalyseur qui est poreux.

5. Batterie de piles à combustible H$_2$/O$_2$ suivant la revendication 3 ou 4, caractérisée en ce que le catalyseur (10) est du platine.

6. Batterie de piles à combustible H$_2$/O$_2$ suivant l'une des revendications 3 à 5, caractérisée en ce que l'électrode rédox (6) est une électrode en platine.

7. Batterie de pile à combustible H$_2$/O$_2$ suivant l'une ou plusieurs des revendications 3 à 6, caractérisée en ce que l'électrode de référence (7) est une électrode au mercure.

8. Batterie de piles à combustible H$_2$/O$_2$ suivant l'une ou plusieurs des revendications 3 à 7, caractérisée en ce qu'il est prévu, dans les dispositifs d'amenée (8, 9) de l'hydrogène et de l'oxygène, des éléments de réglage (12, 13), de préférence des électrovannes à commande par impulsions, en ce que les éléments de réglage (12, 13) sont raccordés à un régulateur (11) et en ce que le régulateur (11) est relié à l'électrode rédox (6) et à l'électrode de référence (7).

9. Batterie de piles à combustible H$_2$/O$_2$ suivant l'une ou plusieurs des revendications 3 à 8, caractérisée en ce que les dispositifs d'amenée (8, 9) de l'hydrogène et de l'oxygène sont raccordés au moyen de conduits (14, 15) pour des gaz aux canaux (16, 17) correspondants d'amenée des gaz à la batterie de piles à combustible (2).

10. Batterie de piles à combustible H$_2$/O$_2$ suivant l'une ou plusieurs des revendications 3 à 9, caractérisée en ce que les dispositifs d'amenée (8, 9) de l'hydrogène et de l'oxygène sont munis de frites (20, 21).